# EUROPEAN PATENT APPLICATION

(11) **EP 4 401 091 A1**
(43) Date of publication of application: **17.07.2024**
(21) Application number: 23151505.7
(22) Date of filing: 13.01.2023
(51) Int. Cl.: G21K 1/00, G06N 10/00, H01L 21/00

(54) **DEVICE FOR CONTROLLING TRAPPED IONS**

(71) Applicant: Infineon Technologies Austria AG, 9500 Villach (AT)
(72) Inventor: ROESSLER, Clemens, 9500 Villach (AT); WAHL, Jakob, 9500 Villach (AT); SCHUEPPERT, Klemens Karl Heinrich, 9500 Villach (AT); ZESAR, Alexander, 9500 Villach (AT); WINKLER, Sarah, 8010 Graz (AT)
(74) Representative: Lambsdorff & Lange Patentanwälte Partnerschaft mbB

(57) **Abstract**

A micro-fabricated device (100) for controlling trapped ions (180) includes a first substrate (120) having a main surface (120A). A structured first metal layer (130) is disposed over the main surface of the first substrate. The structured first metal layer includes electrodes (130_1, 130_2, 130_3) of at least one ion trapping zone configured to trap an ion in a space above the structured first metal layer. A dielectric element (160) is fixedly attached to the first substrate. The dielectric element comprises at least one laser light path (170) and a surface (160S) covered with a layer (140). The layer is an electrically conductive layer. The layer is optically transparent for the laser light. The layer is arranged between the at least one laser light path and the at least one ion trapping zone.

## Description

### Technical Field

This disclosure relates generally to the field of ion traps, and in particular to ion traps for quantum computing and methods of manufacturing such devices.

### Background

Trapped ions are one of the most promising candidates for use as qubits (quantum bits) in quantum computers since they can be trapped with long lifetimes in a scalable array by virtue of electromagnetic fields. Presently, the most advanced ion traps can control about 50 qubits individually and can maintain up to 16 qubits in a fully entangled state. Future quantum computers will need to increase the number of controllable qubits to more than 100 or even 1000 to outperform classical supercomputers. Further, the number of ions used for each qubit will in future be raised to about 6 to 100 ions in order to allow for more efficient error-correction during quantum computing.

Increasing the number of ions trapped simultaneously while maintaining the ability to control and measure them individually is a challenge in trapped ion control and, in particular, in the development of practical quantum computers. The integration of optical elements into ion traps may promise to advance the scaling of ion-based quantum computers. Particular problems in integrating optical elements made of dielectric materials into ion traps arise from the necessary proximity (typically about 1 mm or less) between dielectric surfaces and ions. A first problem is that charges may accumulate on dielectric surfaces interfere with the position of the ion and may need to be individually compensated. Second, electric field fluctuations (such as electric field noise) may couple with the mode of motion of the ion and may heat the ion, with the heating rate increasing the closer the ion is localized to the dielectric surface. As such, it may be beneficial to reduce influencing charges and/or electric fields that are in proximity to the ion.

### Summary

According to an aspect of the disclosure, a micro-fabricated device for controlling trapped ions includes a first substrate having a main surface. A structured first metal layer is disposed over the main surface of the first substrate. The structured first metal layer includes electrodes of at least one ion trapping zone configured to trap an ion in a space above the structured first metal layer. A dielectric element is fixedly attached to the first substrate. The dielectric element comprises at least one laser light path and a surface covered with a layer. The layer is an electrically conductive layer. The layer is arranged between the at least one laser light path and the at least one ion trapping zone.
According to another aspect of the disclosure, a method of manufacturing a micro-fabricated device for controlling trapped ions comprises providing a first substrate having a main surface; forming a first metal layer over the main surface of the first substrate; structuring the first metal layer to form electrodes of at least one ion trapping zone configured to trap an ion in a space above the structured first metal layer; covering a surface of a dielectric element comprising at least one laser light path with a layer, wherein the layer is an electrically conductive layer and wherein the layer is optically transparent for the laser light; bonding the dielectric element over the first substrate in a positionally fixed relationship to the first substrate such that the layer is arranged between the at least one laser light path and the at least one ion trapping zone.

### Brief description of the drawings

The elements of the drawings are not necessarily to scale relative to each other. Like reference numerals designate corresponding similar parts. The features of the various illustrated embodiments can be combined unless they exclude each other and/or can be selectively omitted if not described to be necessarily required. Embodiments are depicted in the drawings and are exemplarily detailed in the description which follows.
Figure 1 is a schematic cross-sectional partial view of an exemplary micro-fabricated device for controlling trapped ions.
Figure 2 is a schematic top perspective view of an exemplary micro-fabricated 2D device for controlling trapped ions.
Figure 3 is a schematic top partial view of an exemplary micro-fabricated device for controlling trapped ions having multiple ion trapping zones.
Figure 4 is a schematic cross-sectional partial view of an exemplary micro-fabricated 2D device for controlling trapped ions, in which an upper surface of the dielectric element is covered by the electrically conductive layer.
Figure 5 is a schematic cross-sectional partial view of an exemplary micro-fabricated 2D device for controlling trapped ions, in which the surface of the dielectric element which is covered with an electrically conductive layer has a curved shape.
Figure 6 is a schematic cross-sectional partial view of an exemplary micro-fabricated 3D device for controlling trapped ions.
Figure 7 is a schematic cross-sectional partial view of an exemplary micro-fabricated 3D device for controlling trapped ions, in which the surface of the dielectric element which is covered with an electrically conductive layer has a curved shape.
Figure 8 is a flowchart illustrating exemplary stages of a method of manufacturing a micro-fabricated device for controlling trapped ions.
Figures 9A-9C illustrate stages of an example of a method of manufacturing a micro-fabricated 2D or 3D device for controlling trapped ions.

### Detailed description

The words "over" or "on" or "beneath" with regard to a part, element or material layer formed or located or disposed or arranged or placed "over" or "on" or "beneath" a surface may be used herein to mean that the part, element or material layer be located (e.g. placed, formed, arranged, disposed, placed, etc.) "directly on" or "directly under", e.g. in direct contact with, the implied surface. The word "over" or "on" or "beneath" used with regard to a part, element or material layer formed or located or disposed or arranged or placed "over" or "on" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

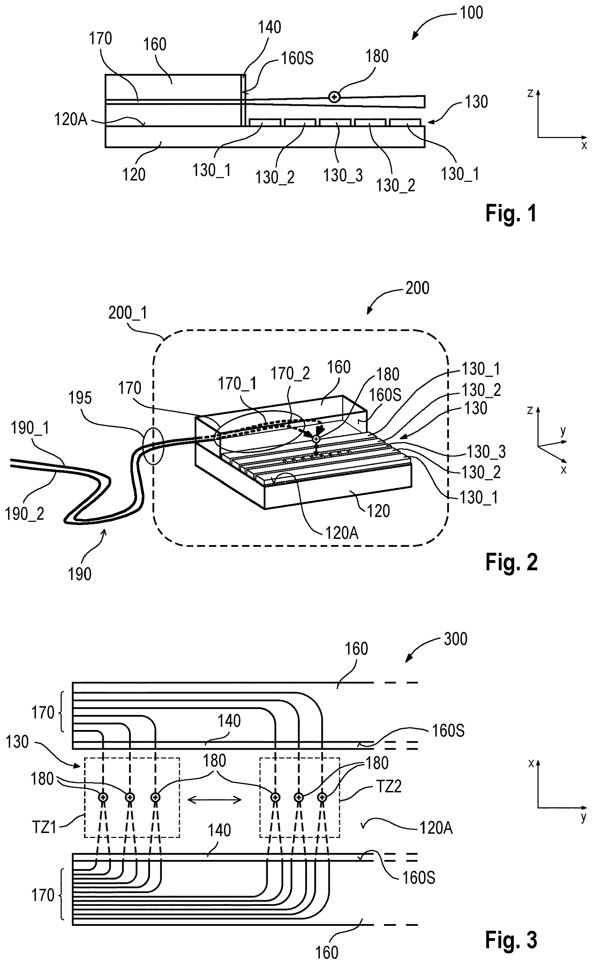

Referring to Figure 1, a micro-fabricated device 100 for controlling trapped ions includes a first substrate 120. The first substrate 120 has an upper main surface 120A. A structured first metal layer 130 is disposed over the upper main surface 120A. The structured first metal layer 130 includes electrodes 130_1, 130_2, 130_3 of at least one ion trapping zone. The ion trapping zone is configured to trap one or more ions 180 in a space above the structured first metal layer 130.

For example, the structured first metal layer 130 may include a central DC electrode 130_3. The central DC electrode 130_3 may, e.g., be arranged between two RF electrodes 130_2. Further, ground electrodes 130_1 may, e.g., be arranged at both sides of the array of DC and RF electrodes 130_3, 130_2. The DC electrode 130_3, the RF electrodes 130_2 and the ground electrodes 130_1 may, e.g., be stripe electrodes which are separate from each other and connected to appropriate DC and RF voltage sources and ground potential, respectively. The electric wiring of the electrodes is not shown in Figure 1.

The electrode pattern of Figure 1 is a mere example, and many other electrode patterns may be used in the micro-fabricated device 100.

In Figure 1 one or a plurality of ions 180 can be controlled in the ion trapping zone (for ease of illustration, only one ion 180 is illustrated in Figure 1). The location of the ion(s) 180 can be controlled by virtue of the electrical voltages applied to the structured first metal layer 130, e.g. the DC voltage applied to the DC electrode 130_3 and the RF voltage applied to the RF electrodes 130_2. The structured first metal layer 130 may be fabricated by micro-fabrication techniques, e.g. techniques as will be described in more detail further below.

The first substrate 120 may be substantially planar. The upper main surface 120A as well as the structured first metal layer 130 may be perpendicular to the Z-direction. The Z-direction may represent the height dimension of the micro-fabricated device 100.

The first substrate 120 may, e.g., be a bulk single material substrate or a processed substrate including a base substrate and one or a plurality of layers (dielectric layers, metal layers) disposed over the base substrate. For example, the micro-fabricated device 100 for controlling trapped ions may be implemented with multiple metal layers rather than only the first metal layer 130 (i.e. the electrode layer) illustrated in Figure 1. For example, the substrate 120 may include a routing metal layer (not shown) and an insulating layer (not shown) covering the routing metal layer, wherein the routing metal layer and the first metal layer 130 forming the electrodes of the micro-fabricated device 100 (ion trap) are electrically interconnected by vias running through the insulating layer. In this and other cases, the first surface 120A of the first substrate 120 may, e.g., be formed by the upper surface of the insulating layer (not shown). Such insulating layer may, e.g., be of an inorganic dielectric material, e.g. silicon oxide and/or silicon nitride.

In other words, Figure 1 is a schematic illustration of a micro-fabricated device 100 which also applies to device implementations using any kind of carrier (referred to as first substrate 120) for supporting the structured first metal layer 130.

The micro-fabricated device 100 includes a dielectric element 160. The dielectric element 160 is fixedly attached to the first substrate 120. The dielectric element 160 includes at least one laser light path 170. The at least one laser light path 170 may be configured to direct laser light towards the position(s) of ion(s) 180 trapped in the ion trapping zone during operation. Further, the dielectric element 160 includes a surface 160S covered with an electrically conductive layer 140. The electrically conductive layer 140 is optically transparent for laser light (e.g., laser light with a wave length in a range from 150 nm to 4 µm or 200 nm to 3 um, and in particular from 300 nm to 2.1 um). That is, laser light passing through the laser light path 170 may pass the electrically conductive layer 140 to reach the position of an ion 180 trapped in the at least one ion trapping zone during operation. Typically, optically transparent may mean that more than 500 of the laser light may pass through a layer (such as through electrically conductive layer 140). In other examples, the electrically conductive layer 140 may be configured such that more than 700 or more than 80% or more than 90% of the laser light may pass through the electrically conductive layer (such as laser light with a wave length in a range from 150 nm to 4 um, and in particular from 300 nm to 2 um) .

The surface 160S of the dielectric element 160 may be a side face of the dielectric element 160. The at least one laser light path 170 in the dielectric element 160 may terminate at the electrically conductive layer 140, i.e., the laser light, upon exiting the at least one laser light path 170 at the surface 160S, traverses the electrically conductive layer 140 to enter free space.

The electrically conductive layer 140 is transparent to the laser light. The electrically conductive layer may be formed by one or more of the group consisting of a TiN layer, a SiN:H layer, a layer of a conductive and transparent oxide, in particular indium tin oxide (ITO) or aluminum doped zinc oxide (Al:ZnO), an amorphous Si layer, or a metal layer, in particular an Au layer.

The electrically conductive layer 140 may have a layer thickness equal to or less than 200 nm, 150 nm, 100 nm, 50 nm, or 20 nm. The thickness may depend, for example, on the transparency of the material of the electrically conductive layer 140. For example, the less transparent the electrically conductive layer 140 is to the laser light used, the smaller the thickness of the electrically conductive layer 140 may be. Other parameters that may be considered include keeping the roughness of the electrically conductive layer 140 as low as possible and/or providing sufficient electrical conductivity to effectively remove charge carriers from the coated surface 160S.

For example, if the electrically conductive layer 140 is made of a TiN coating, the layer thickness may, e.g., be in a range between 5 nm or 6 nm as a lower limit and 10 nm or 13 nm or 15 nm or 20 nm as an upper limit.

For example, if the electrically conductive layer 140 is made of a SiN:H coating, i.e. amorphous SiN with incorporated hydrogen, the layer thickness may, e.g., be larger, since SiN:H is a suitable transparent material. For example, the layer thickness may, e.g., be in a range between 10 nm and 200 nm, more specifically 100 nm and 150 nm. Further, this coating may have a low roughness.

SiN:H can be deposited, for example, by plasma-enhanced chemical vapor deposition (PECVD). PECVD provides uniform deposition on a low roughness side surface 160S of the dielectric element 160 as well as a uniform edge coverage. Electrical conductivity was measured at 4*10⁴ ohm*m at -30°C. In addition, an optical extinction coefficient of less than 0.5 was measured at a layer thickness of 150 nm, corresponding to a transmission of the electrically conductive layer 140 of more than 99.99%. Further, an atomic force microscopy (AFM) measurement of the roughness of the SiN:H layer 140 on the side surface 160S resulted in a root-mean-square height of less than 3 nm.

For example, if the electrically conductive layer 140 is made of Au, the layer thickness may, e.g., be in a range between 2 nm and 10 nm, and preferably below 7 or 6 or 5 nm.

In addition, conductive and transparent oxides can be used to form the electrically conducive layer 140, for example. Examples for conductive and transparent oxides are indium tin oxide (ITO) and Al:ZnO. These materials for sidewall coating provide electrical conductivity (e.g., for AL:ZnO a sheet resistance of 300 Ohm/square with a 50 nm layer) while having a proper transparency. Furthermore, these materials can be deposited, e.g., with atomic layer deposition (ALD), which provides a uniform deposition on vertical and even on overhanging shapes, for example. A thickness of the layer 140 may, e.g., be about 5 nm - 200 nm or more, such as 2 um.

Further, amorphous silicon (aSi) can be applied to form the electrically conducive layer 140, for example. Amorphous silicon does not need to be mixed with hydrogen to be transparent in a thin layer.

The dielectric element 160 may include or be of glass, in particular quartz glass, borosilicate glass, alkali-free glass, or fused silica. These materials, and in addition sapphire or semiconductor materials such as, e.g., Si, may also be used as materials for the first substrate 120 (or for a base substrate included in the first substrate 120). In particular, quartz glass, borosilicate glass and sapphire are excellent substrate materials due to their low RF loss angle and high optical transparency. Glass, quartz glass, borosilicate glass, alkali-free glass and fused silica are excellent materials for the dielectric element 160 due to their high optical transparency.

For example, referring to Figure 1 the first substrate 120 (or a base substrate forming a part of the first substrate 120 as described above) may, e.g., include or be of silicon and/or the dielectric element 160 may, e.g., include or be of glass.

The laser light path 170 may include a waveguide, in particular a short-pulse-laser direct written (SPLDW) waveguide or a waveguide formed by an optical layer structure.

Figure 2 illustrates a perspective view of a micro-fabricated device 200 for controlling trapped ions. The micro-fabricated device 200 is similar to micro-fabricated device 100, except that a plurality of laser light paths 170_1, 170_2 are shown. Further, in the exemplary device 200, the laser light paths 170_1, 170_2, ... are curved and/or enter the dielectric element 160 at a side surface which is inclined or perpendicular to the surface 160S of the dielectric element 160 rather than parallel as in Figure 1. In view of all other aspects and features, reference is made to the description above to avoid reiteration. In Figure 2 the electrically conducive layer 140 is not shown for ease of illustration.

More specifically, the X-direction and the Y-direction are perpendicular to each other and to the Z-direction and define a plane in the width and length direction of the micro-fabricated device 200, respectively. Whereas in Figure 1 the laser light path 170 passes through the dielectric element 160 in, for example, a straight line in, for example, the X direction, in Figure 2 the laser light path(s) 170, 170_1, 170_2, ... may initially be oriented substantially in the Y-direction and then curve to be substantially in the X-direction near the exit.

In general, the number of laser light paths 170_1, 170_2, ..., formed in the dielectric element 160 may be higher than one, e.g., equal to or more than two, three, four, five, six ... to ten waveguides per trapped ion 180. Since the ion trapping zone of Figure 2 may trap a plurality of ions and/or the dielectric element 160 may include laser light paths 170_1, 170_2 for a plurality of trapping zones of the micro-fabricated device 100 (see, e.g., Figure 3), the at least one laser light path 170 may, in practice, be represented by an array of laser light paths 170_1, 170_2, ... having a number of equal to or more than 10, 50, 100, 200, etc. laser light paths

Each laser light path 170_1, 170_2 may be implemented as a SPLDW waveguide, for example. A SPLDW waveguide is a laser-inscribed waveguide which has been directly written into the dielectric element 160 by translating the focal spot of a very short (typically femtosecond) laser pulse through the bulk dielectric material of the dielectric element 160. In other words, SPLDW waveguides are defined by means of local refractive index modifications using short-pulse lasers for their generation. SPLDW waveguides, which are written by a femtosecond pulse laser, are also known as FLDW (femtosecond laser direct written) waveguides.

SPLDW waveguides may be produced to have a curved shape, allowing to redirect the laser light emitting from each laser light path 170_1, 170_2 to intersect, e.g., at the position of an ion 180. Further, the parameters of the laser light paths 170_1, 170_2, ... may be selected to ensure that the laser light paths each are prepared as a single mode waveguide which preserves polarization and provides for low losses (e.g. << 10dB) during coupling and decoupling of laser light.

The micro-fabricated device 100, 200 may further include at least one optical fiber 190 for supplying the at least one laser light path 170 with laser light (not shown in Figure 1). The at least one optical fiber 190 (or, more generally, a plurality of optical fibers 190_1, 190_2, ...) is fixedly connected to an input of the at least one laser light path 170 (or, e.g., to the inputs of single laser light paths 170_1, 170_2, ...). The optical fibers 190_1, 190_2, ... may be implemented as a light-guiding fiber-optics array with each optical fiber 190_1, 190_2 being firmly connected to a corresponding laser light path 170_1, 170_2. In particular, the optical fibers 190_1, 190_2, ... are permanently connected to the inputs of the respective laser light paths 170_1, 170_2, .... This approach also reduces the susceptibility of the micro-fabricated device 100, 200 to drift and vibration.

The laser light path(s) 170_1, 170_2, ... may extend in a plane which is substantially parallel to the upper main surface 120A (or, differently stated, which is perpendicular to the Z-direction). In particular, the entire array of laser light paths 170_1, 170_2, ... from their input to their exit may extend in this "horizontal" plane. The optional curvature of the laser light paths 170_1, 170_2 may, in particular, also remain in this plane.

After fixedly attaching the dielectric element 160 to the first substrate 120, the micro-fabricated device 100 is no longer positional adjustable. While this feature may necessitate high precision assembly of the parts, it allows, on the other hand, for high robustness and insensitivity to vibrations.

Using at least one (or, more generally, an array of) laser light path(s) 170_1, 170_2, ... integrated in the micro-fabricated device 100, 200 allows to provide a densely packed array of laser light paths with optical exits close to the ion(s) 180. Further, the susceptibility to drifts and vibrations is reduced, since the dielectric element 160 is fixedly attached to the first substrate 120. In other words, the concept of using laser light paths (instead of free space optics) for transmitting laser light "over the final stretch" near to the ion(s) reduces both the problem of lack of space and the problem of interference from mechanical influences (e.g. vibrations).

However, these and other concepts may result in the surfaces of the dielectric elements 160 being relatively close to the position of the ion(s) 180, e.g., only about one or a few mm away. This particularly applies to the dielectric surface 160S at which the laser light emerges the dielectric element 160. Therefore, the interaction of the dielectric surfaces, in particular the "optical" dielectric surfaces 160S used for ion illumination, with the ion(s) 180 may increase.

In Figure 2, the dashed line 200_1 may represent the boundary between external environment and vacuum and cryogenic environment. Laser light may enter the vacuum and cryogenic environment of the micro-fabricated device 100 via the feedthrough 195 of a vacuum and cryogenic chamber (or cryostat - not shown), which is passed by the at least one (or the array of) optical fiber (s) 190 or 190_1, 190_2,... .

It is to be noted that the micro-fabricated devices 100, 200 of Figures 1 and 2 may include more than one dielectric element 160. In particular, a second dielectric element (not shown) may be arranged at the right side of the micro-fabricated device 200, i.e. in a mirrored relationship with respect to the position of the ion 180. It is also possible that dielectric elements (not shown) are arranged in the X-direction of the micro-fabricated device 100, 200, i.e. in a direction perpendicular to the direction of the (e.g. bar-shaped) dielectric element 160. In other words, laser light may be directed to the ion(s) 180 via laser light paths 170, 170_1, 170_2 from one, two, three or all four lateral sides.

Figure 3 illustrates a schematic plan view of an exemplary micro-fabricated device 300. The micro-fabricated device 300 may be identical or similar to the micro-fabricated device 200 (Figure 2). The micro-fabricated device 300 may include a plurality of ion trapping zones, of which two, namely TZ1 and TZ2, are shown. For example, in each ion trapping zone TZ1, TZ2 a plurality of ions 180 may be trapped. In Figure 3 the electrode structure 130 is not shown for ease of illustration.

For example, the lower dielectric element 160 may comprise a plurality of laser light paths 170 (e.g. SPLDW waveguides) wherein a subset (e.g. two laser light paths) is configured to direct laser light towards the same ion 180. Further, the lower dielectric element 160 may comprise a plurality of laser light paths 170 (e.g. SPLDW waveguides) configured to direct laser light towards at least a first ion 180 trapped in the first ion trapping zone TZ1 and a second ion 180 trapped in the second ion trapping zone.

The upper dielectric element 160 also includes laser light paths 170 (e.g. SPLDW waveguides) for both (in general: a plurality of) ion trapping zones TZ1, TZ1. In the specific example shown, only one laser light path 170 per ion 180 is implemented in the upper dielectric element 160. However, the upper dielectric element 160 may likewise include a plurality of laser light paths 170 per ion 180.

In addition, the micro-fabricated device 300 may be designed in accordance with micro-fabricated device 100, i.e. the laser light paths 170 may be straight and/or may be implemented by layered waveguides rather than SPLDW waveguides, for example.

The ion trapping zones TZ1, TZ2 can be designed, for example, as linear ion traps allowing the ions 180 to move in the Y-direction (see double arrow). Differently stated, the micro-fabricated device 300 may be configured to shuttle ions 180 from the first ion trapping zone TZ1 to the second ion trapping zone TZ2 and/or in opposite direction.

The ion trapping zones TZ1, TZ2 may implement different functionalities in terms of ion generation, ion handling and/or ion control. For example, an ion trapping zone TZ1, TZ2 may be a loading zone, a storage zone or a processing zone. In a loading zone the ions 180 are trapped and cooled by employing laser cooling. Typically, ions 180 are generated by thermal- or laser-based evaporation of bulk material to generate neutral atoms. Laser-based ionization of the neutral atoms allows for trapping. The ions 180 are then cooled by employing laser cooling and stored in the loading zone or in a storage zone for later use. Typically, the evaporation and the ionization require relatively high energy laser light.

Trapped and cooled ions 180 may then be transferred from the loading zone or the storage zone to a processing zone. In the processing zone, quantum operations between trapped ions 180 may be carried out. Further, if the ions 180 are trapped as qubits, the qubit state may optionally be read out. Typically, a processing zone requires the access of laser light for laser-based state preparation of trapped ions 180 and laser light for reading out the qubit states.

From the examples above, it is apparent that the laser light paths 170 may serve a variety of different functions. The dielectric element 160 may laser light paths 170 for guiding laser light to ionize and/or to cool and/or to prepare a qubit state and/or to read a qubit state and/or to dump laser light out of the micro-fabricated device 300. For example, all laser-optical functions of the micro-fabricated device 300 may be performed through the laser light paths 170 integrated in the micro-fabricated device 300. However, it is also possible that specific laser light (e.g. for laser-based evaporation) is coupled via free space optics, while other functions are performed through laser light paths 170.

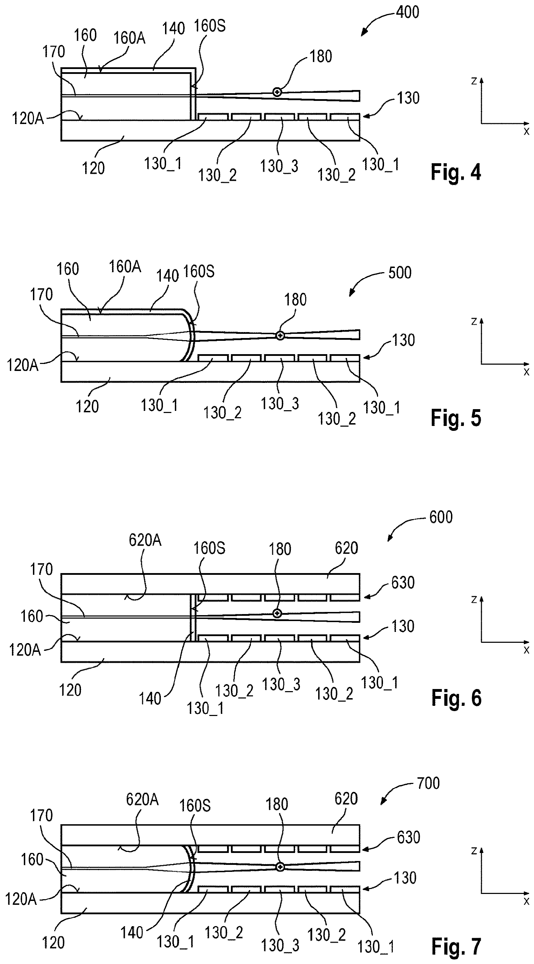

Figure 4 illustrates a 2D micro-fabricated device 400 for controlling trapped ions. The micro-fabricated device 400 may have the same design as the micro-fabricated devices 100, and reference is made to the above description to avoid reiteration. In the 2D micro-fabricated device 400, the electrically conductive layer 140 may further cover an upper surface 160A of the dielectric element 160. In addition, the edge between the upper surface 160A and the surface 160S may be covered by the conductive layer.

Figure 5 illustrates a 2D micro-fabricated device 500 for controlling trapped ions. The micro-fabricated device 500 may have the same design as the micro-fabricated devices 400, and reference is made to the above description to avoid reiteration. However, in the 2D micro-fabricated device 400, the surface 160S of the dielectric element 160 may have a curved shape rather than a straight or flat shape oriented in, e.g., the vertical direction as shown in Figure 4. More specifically, the surface 160S of the dielectric element 160 may be shaped as an optical lens, e.g. as one or a plurality of optical lenses at the exit ports of the laser light paths 170, 170_1, 170_2, .... This allows the laser light beam(s) to be focused on the position(s) of the ion(s) 180 using the dielectric element 160.

Figure 6 illustrates a 3-dimensional (3D) micro-fabricated device 600 for controlling trapped ions. The micro-fabricated device 600 may have the same construction as, e.g., any of the micro-fabricated devices 100, 200, 300, 400, 500, and reference is made to the above description to avoid reiteration. The 3D micro-fabricated device 600 may further include a second substrate 620 which is spaced apart from the first substrate 120. The at least one ion trapping zone (e.g., TZ1 or TZ2, see Figure 3) is located in a space between the first substrate 120 and the second substrate 620. To that end, a structured second metal layer 630 may be disposed over a lower main surface 620A of the second substrate 620 facing the upper main surface 120A of the first substrate 120. The structured second metal layer 620 may include electrodes of the at least one ion trapping zone located between the structured first and second metal layers 130, 630. Similar to the structured first metal layer 130, the structured second metal layer 630 may also contain RF electrodes and DC electrodes which may, e.g., be patterned as stripes. Features disclosed for the first substrate 120 and the structured first metal layer 130 may likewise apply to the second substrate 620 and the structured second metal layer 630, respectively.

Similar as the first substrate 120, the second substrate 620 may, e.g., (also) include or be of silicon or of glass (e.g. quartz glass or borosilicate glass or alkali-free glass) or of sapphire.

In micro-fabricated device 600 the dielectric element 160 may form a spacer structure between the first substrate 120 and the second substrate 620. That is, in the exemplary micro-fabricated device 600, the dielectric element 160 provides an optical function of integrating the laser light path 170 into the micro-fabricated device 600 in combination with protecting the ion 180 through the electrically conductive layer 140 from interference, and (optionally) a mechanical function, namely to define the distance between the first and second substrates 120, 620 and guarantee the robustness of the micro-fabricated device 600.

Figure 7 illustrates another example of a micro-fabricated device 700. The micro-fabricated device 700 is similar to micro-fabricated device 600, except that the ion-facing surface 160S of the dielectric element 160 may be formed as a lens or as an array of lenses as described above in conjunction with Figure 5.

In general, the laser light paths 170_1, 170_2 may terminate at the (exit) surface 160S of the dielectric element 160. The surface 160S (or, more generally, the interface between the dielectric element 160 and the electrically conductive layer 140) may be configured to have an optical function (e.g., a light focusing function and/or a light redirecting function and/or a polarization control function and/or an attenuation function, all of which are, for example, frequency dependent) for the laser light exiting from each laser light path 170_1, 170_2. For example, the surface 160S may be curved to form an optical lens, as exemplarily shown in Figures 5 and 7. However, in other examples, the surface 160S may be provided with another optical transition element such as a grating, etc.

In all examples, the electrically conductive layer 140 may completely cover the surface 160S of the dielectric element 160 facing the ion 180. In particular, the electrically conductive layer 140 may completely cover a portion of the surface 160S of the dielectric element 160 that faces the ion and is in line of sight with the ion 180. More in particular, the electrically conductive layer 140 may completely cover a portion of the surface 160S of the dielectric element 160 that faces the ion, is in line of sight with the ion 180 and is less distant from the position of the ion 180 than, for example, 5 mm or 2 mm or 1 mm. Further, all surfaces of all dielectric elements 160 meeting one of the above conditions may be completely covered by the electrically conductive layer 140.

In all examples, the electrically conductive layer 140 is not an electrode of the ion trap. The electrically conductive layer 140 may be electrically grounded or electrically bias-grounded (i.e. may be held on a constant potential which may, optionally, be offset from ground). In particular, the electrically conductive layer 140 does not effectively or intentionally affect the position of the ion 180 which is, e.g., defined by the design of the trap electrodes and the potentials applied to the trap electrodes. Further, the electrically conductive layer 140 may not be specifically structured as is the case with trap electrodes, but may be unstructured. Still further, the electrically conductive layer 140 may, e.g., be substantially thinner than common trap electrodes.

In the above discussed examples, the electrically conductive layer 140 may prevent charges from accumulating on dielectric surfaces that would otherwise interfere with the position of the ion 180 and that would otherwise need to be compensated for individually. In addition, the electrically conductive layer 140 may also reduce electric field fluctuations (e.g., coming from the dielectric element 160) that would couple with the ion's mode of motion and increase its temperature.

The concepts, variations and specific features of the micro-fabricated devices 100-700 can be combined and selectively interchanged. For example, the micro-fabricated devices 100-300 may be provided with a second substrate 620 to form 3D devices, as shown in Figures 6 and 7. Further, all micro-fabricated devices 100-700 may be equipped with dielectric elements 160 and/or spacer structures accommodating SPLDW waveguide(s) 170 as laser light paths. Generally, in all embodiments the elements 160 or substrates 120, 620 carrying the laser light paths 170 or the array(s) of laser light paths 170_1, 170_2, ... may be integrated by micro-fabrication techniques (e.g. by SPLDW waveguide writing) in the respective micro-fabricated device 100-700.

The illustrations of Figures 1 to 7 are partial views illustrating one (Figures 1, 2, 4, 5, 6, 7) or two (Figure 3) ion trapping zones TZ1, TZ2. In general, these structures can be understood as repeating building blocks of a scalable device in which a large number of corresponding micro-fabricated devices 100-700 are arranged side by side in a lateral dimension.

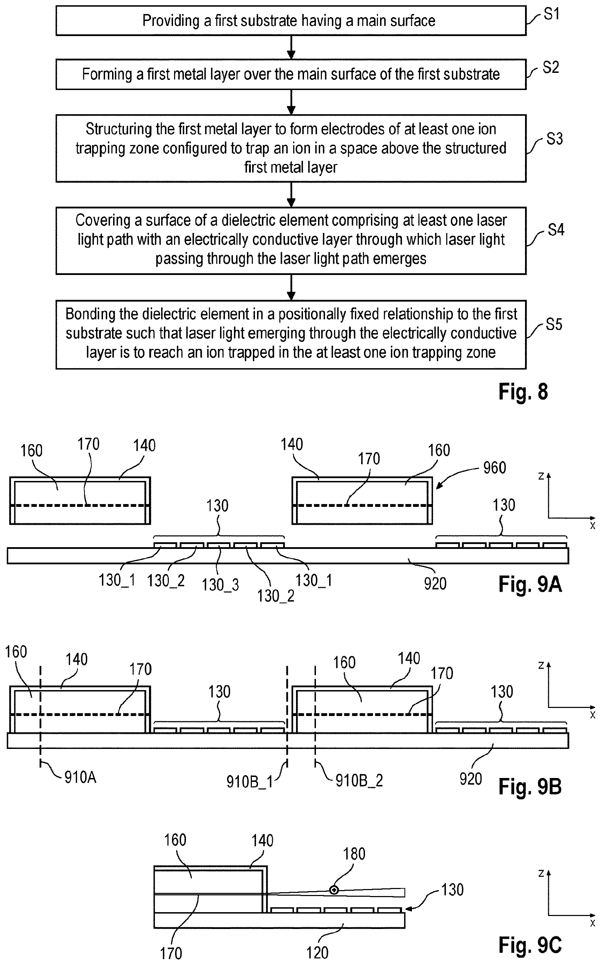

Figure 8 is a flowchart illustrating exemplary stages of a method of manufacturing a micro-fabricated device 100-700 for controlling trapped ions. At S1 a first substrate having a main surface is provided.

At S2 a first metal layer is formed over the main surface of the first substrate. The first metal layer may, e.g., be formed by micro-fabrication techniques such as, e.g., chemical vapor deposition (CVD), physical vapor deposition (PVD), sputtering and/or plating techniques (e.g. electroless plating, galvanic plating, etc.).

At S3 the first metal layer is structured to form electrodes of at least one ion trapping zone configured to trap an ion in a space above the structured first metal layer. Generally, micro-fabrication techniques for structuring may, e.g., involve photolithography methods (e.g. including photoresist application, patterning, etching) and other structuring techniques.

At S4 a surface of a dielectric element comprising at least one laser light path is covered with an electrically conductive layer, the electrically conductive layer being optically transparent for the laser light. Laser light passing through the laser light path may run through and emerge at the electrically conductive layer, for example. The electrically conductive layer may be deposited by various methods, depending on the material of electrically conductive layer. For example, PECVD may be used and has proven to provide high quality SiN:H layers, for example. PECVD may, e.g., also be used for deposition of other materials such as, e.g., amorphous silicon. Further deposition methods may include atomic layer deposition (e.g. of ITO or Al:ZnO) and sputtering (e.g. of thin metallic layers).

At S5 a dielectric element is bonded in a positionally fixed relationship to the first substrate such that the electrically conductive layer is arranged between the at least one laser light path and the at least one ion trapping zone. That way, laser light emerging through the electrically conductive layer may reach a position in the at least one ion trapping zone where an ion is trapped during operation.

For example, the method of Figure 8 may be carried out on wafer level. Figure 9A illustrates a structured spacer waver 960. The structured spacer wafer 960 includes a plurality of spacer structures. The spacer structures may be formed by dielectric elements 160 with integrated laser light paths (e.g. SPLDW waveguides) 170 and electrically conductive layers 140 covering surfaces 160S of the dielectric elements 160 facing the position of an ion in the ion trapping zone. For example, the surfaces 160S and (optionally) 160A of the dielectric element 160 are completely covered by the electrically conductive layer 140. The structured spacer wafer 960 may, e.g., be made of any of the aforementioned transparent dielectric materials, in particular of glass or fused silica.

In one example, SPLDW waveguides are written in the structured spacer wafer 960, i.e. on wafer-level, to form the laser light paths 170. In other examples, the patterned spacer wafer 960 is shaped to include optical layer structures that act as waveguides to form the laser light paths 170.

The first substrate 120 is represented by a substrate wafer 920 (or a part thereof), for example. The substrate wafer 920 may, e.g., be made of any of the aforementioned materials, e.g. in particular of silicon. The substrate wafer 920 is provided with the electrodes 130_1, 130_2, 130_3 to control trapped ions. Manufacturing of the substrate wafer and electrodes 130_1, 130_2, 130_3 may include stages S1-S3 of Figure 8. As mentioned before, the substrate wafer 920 may have been processed to include one or a plurality of metal layers (e.g. shielding layer, routing layer) and insulating layer(s) of, e.g., an inorganic dielectric material extending between and/or above such integrated metal layer(s).

Referring to Figure 9B, the structured spacer wafer 960 is bonded to the substrate wafer 920. Optionally, a second substrate wafer (not shown) including the second substrates 620 may be wafer-bonded on top of the structured spacer wafer 960.

Subsequently, the wafer stack may be separated into multiple micro-fabricated devices 100-700 by wafer dicing, e.g. mechanical sawing or stealth dicing. Separation may be carried out along the vertical dashed lines 910A (left side) and 910B_1 or 910B_2 (right side).

Figure 9C illustrates an example of a chip after separation along separation lines 910A and 910B_1, for example. Each chip may correspond, e.g., to one of the micro-fabricated devices 100-700 and may include at least one dielectric element 160 with integrated laser light path(s) 170 and a charge accumulation inhibiting surface coating provided by the electrically conductive layer 140.

Other processes of manufacturing the micro-fabricated devises 100-700 are also possible. For example, the laser light paths 170 may be generated on chip-level (in particular if made by SPLDW). Further, wafer separation into chips may be performed before assembling the dielectric elements 160 on the first substrate 120 (or on the first substrate wafer 920), and the assembly process may be carried out by using a pick-and-place method.

### EXAMPLES

The following examples pertain to further aspects of the disclosure:
Example 1 is a micro-fabricated device for controlling trapped ions includes a first substrate having a main surface. A structured first metal layer is disposed over the main surface of the first substrate. The structured first metal layer includes electrodes of at least one ion trapping zone configured to trap an ion in a space above the structured first metal layer. A dielectric element is fixedly attached to the first substrate. The dielectric element comprises at least one laser light path and a surface covered with a layer, wherein the layer is an electrically conductive layer, and wherein the layer is arranged between the at least one laser light path and the at least one ion trapping zone.
In Example 2, the subject matter of Example 1 can optionally include wherein the dielectric element is of glass, quartz glass, alkali-free glass, borosilicate glass, or fused silica.
In Example 3, the subject matter of Example 1 or 2 can optionally include wherein the laser light path comprises a waveguide, in particular a short-pulse-laser direct written waveguide or a waveguide formed by an optical layer structure.
In Example 4, the subject matter of any of the preceding Examples can optionally include wherein the layer is formed by one or more of the group consisting of a TiN layer, a SiN:H layer, a layer of a conductive and transparent oxide, in particular indium tin oxide or aluminum doped zinc oxide, an amorphous Si layer, or a metal layer, in particular an Au layer.
In Example 5, the subject matter of any of the preceding Examples can optionally include wherein the layer has a layer thickness equal to or less than 200 nm, 150 nm, 100 nm, 50 nm, or 20 nm.
In Example 6, the subject matter of any of the preceding Examples can optionally include wherein the layer is electrically grounded or electrically bias-grounded.
In Example 7, the subject matter of any of the preceding Examples can optionally include wherein the surface of the dielectric element is a side face of the dielectric element.
In Example 8, the subject matter of any of the preceding Examples can optionally include wherein the surface of the dielectric element has a curved shape.
In Example 9, the subject matter of any of the preceding Examples can optionally further include a second substrate spaced apart from the first substrate, wherein the at least one ion trapping zone is located in a space between the first substrate and the second substrate, and the dielectric element forms a spacer structure between the first substrate and the second substrate.
Example 10 is a method of manufacturing a micro-fabricated device for controlling trapped ions, the method comprising: providing a first substrate having a main surface; forming a first metal layer over the main surface of the first substrate; structuring the first metal layer to form electrodes of at least one ion trapping zone configured to trap an ion in a space above the structured first metal layer; covering a surface of a dielectric element comprising at least one laser light path with an electrically conductive layer through which laser light passing through the laser light path emerges; and bonding the dielectric element in a positionally fixed relationship to the first substrate such that laser light emerging through the electrically conductive layer is to reach an ion trapped in the at least one ion trapping zone.
In Example 11, the subject matter of Example 10 can optionally further include forming the at least one light path by generating a short-pulse-laser direct written waveguide in the dielectric element or by generating an optical layer structure in the dielectric element.
In Example 12, the subject matter of Example 10 or 11 can optionally include wherein the first substrate is a wafer and bonding comprises wafer bonding of a structured dielectric wafer comprising a plurality of dielectric elements to the first substrate.
In Example 13, the subject matter of any of Examples 10 to 12 can optionally further include bonding a second substrate to the structured dielectric wafer, wherein the second substrate is spaced apart from the first substrate and the at least one ion trapping zone is located in a space between the first substrate and the second substrate.
In Example 14, the subject matter of Example 13 can optionally include wherein bonding of the second substrate comprises wafer bonding of the second substrate to the structured dielectric wafer, wherein the plurality of dielectric elements of the structured dielectric wafer form a plurality of spacer structures which define the distance between the first substrate and the second substrate.
In Example 15, the subject matter of any of Examples 12 to 14 can optionally further include dicing the wafer forming the first substrate and the structured dielectric to provide a plurality of micro-fabricated devices.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A micro-fabricated device for controlling trapped ions, the device comprising:
a first substrate having a main surface;
a structured first metal layer disposed over the main surface of the first substrate, the structured first metal layer comprising electrodes of at least one ion trapping zone configured to trap an ion in a space above the structured first metal layer; and
a dielectric element fixedly attached to the first substrate, wherein the dielectric element comprises at least one laser light path and a surface covered with a layer,
wherein the layer is arranged between the at least one laser light path and the at least one ion trapping zone, and
wherein the layer is an electrically conductive layer.

2. The micro-fabricated device of claim 1, wherein the dielectric element is of glass, quartz glass, alkali-free glass, borosilicate glass, or fused silica.

3. The micro-fabricated device of claim 1 or 2, wherein the laser light path comprises a waveguide, in particular a short-pulse-laser direct written waveguide or a waveguide formed by an optical layer structure.

4. The micro-fabricated device of any of the preceding claims, wherein the layer is formed by one or more of the group consisting of a TiN layer, a SiN:H layer, a layer of a conductive and transparent oxide, in particular indium tin oxide or aluminum doped zinc oxide, an amorphous Si layer, or a metal layer, in particular an Au layer.

5. The micro-fabricated device of any of the preceding claims, wherein the layer has a layer thickness equal to or less than 200 nm.

6. The micro-fabricated device of any of the preceding claims, wherein the layer is optically transparent for laser light with a wave length in a range from 200 nm to 2.5 um.

7. The micro-fabricated device of any of the preceding claims, wherein the layer is electrically grounded or electrically bias-grounded, and/or

8. The micro-fabricated device of any of the preceding claims, wherein the surface of the dielectric element is a side face of the dielectric element, and/or wherein the surface of the dielectric element has a curved shape.

9. The micro-fabricated device of any of the preceding claims, further comprising:
a second substrate spaced apart from the first substrate, wherein the at least one ion trapping zone is located in a space between the first substrate and the second substrate, and the dielectric element forms a spacer structure between the first substrate and the second substrate.

10. A method of manufacturing a micro-fabricated device for controlling trapped ions, the method comprising:
providing a first substrate having a main surface;
forming a first metal layer over the main surface of the first substrate;
structuring the first metal layer to form electrodes of at least one ion trapping zone configured to trap an ion in a space above the structured first metal layer;
covering a surface of a dielectric element comprising at least one laser light path with a layer, wherein the layer is an electrically conductive layer; and
bonding the dielectric element in a positionally fixed relationship to the first substrate such that the layer is arranged between the at least one laser light path and the at least one ion trapping zone.

11. The method of claim 10, further comprising:
forming the at least one light path by generating a short-pulse-laser direct written waveguide in the dielectric element or by generating an optical layer structure in the dielectric element.

12. The method of claim 10 or 11, wherein the first substrate is a wafer and bonding comprises wafer bonding of a structured dielectric wafer comprising a plurality of dielectric elements to the first substrate.

13. The method of claim 12, further comprising
bonding a second substrate to the structured dielectric wafer, wherein the second substrate is spaced apart from the first substrate and the at least one ion trapping zone is located in a space between the first substrate and the second substrate.

14. The method of claim 13, wherein bonding of the second substrate comprises wafer bonding of the second substrate to the structured dielectric wafer, wherein the plurality of dielectric elements of the structured dielectric wafer form a plurality of spacer structures which define the distance between the first substrate and the second substrate.

15. The method of any of claims 12 to 14, further comprising:
dicing the wafer forming the first substrate and the structured dielectric to provide a plurality of micro-fabricated devices.
